# EUROPÄISCHE PATENTANMELDUNG

(11) **EP 0 808 869 A2**
(43) Veröffentlichungstag der Anmeldung: **26.11.1997**
(21) Anmeldenummer: 97108334.0
(22) Anmeldetag: 22.05.1997
(51) Int. Cl.: C08L 23/06

(54) **In Wasser dispergierbare pulvrige Mischungen von Polyolefin-Wachsteilchen mit hydrophilen Dispergatoren**

(30) Priorität: 23.05.1996 DE 19620810
(71) Anmelder: BASF AKTIENGESELLSCHAFT, 67056 Ludwigshafen (DE)
(72) Erfinder: Kingma, Arend Jouke, Dr., 67069 Ludwigshafen (DE)
(74) Vertreter: Kinzebach, Werner, Dr.

(57) **Zusammenfassung**

Für die spätere Herstellung von hochkonzentrierten wässrigen Polyolefinwachsdispersionen sind pulvrige Mischungen geeignet, die aus (A) einem nicht funktionalisiertem Polyolefinwachs mit einer Teilchengrösse von 1 bis 50 µm und einer Säurezahl von unter 5 mg KOH / g Wachs und (B) untergeordneten Mengen an mit 1 bis 50 Mol 1,2-Alkylenoxid umgesetzten Glyceriden von überwiegend ungesättigten C₁₆- bis C₂₂-Monocarbonsäuren, wie einem ethoyliertem Ricinusöl, durch Vermischen ohne Zugabe von Wasser hergestellt wurden. Die Mischungen sind gut lagerfähig, transportierbar und dosierbar und dienen als Hilfsstoffe für Druckfarben, Lacke, Pflegemittel und Kosmetika.

## Beschreibung

Die Erfindung betrifft Mischungen von nicht-funktionalisierten Polyethylen- oder Polypropylen-Wachsteilchen mit bestimmten hydrophilen Dispergatoren, die insbesondere in Form rieselfähiger Pulver vorliegen und für die spätere Herstellung von wässrigen Wachsdispersionen geeignet sind.

Wässrige Wachsdispersionen auf der Basis von Polyolefinen haben eine sehr große wirtschaftliche Bedeutung. Man unterscheidet hierbei Primärdispersionen und Sekundärdispersionen. Primärdispersionen sind z.B. gemäß der DE-C 1 019 087 durch Polymerisation von Ethylen in einer tensidhaltigen wässrigen Phase unter Druck in Gegenwart eines Initiatorsystems herstellbare und im Handel erhältliche Polyethylenwachs-Dispersionen (z.B. Poligen® PE der BASF). Die Teilchengröße solcher Wachsdispersionen liegt im Bereich von 0,01 bis 1 µm.

Sekundärdispersionen auf der Basis von Polyolefinwachsen werden insbesondere aus sogenannten emulgierbaren oder funktionelisierten Polyolefinwachsen hergestellt, worunter man niedermolekulare Polyolefinketten versteht, die Carboxylat-,Keto- und/oder Alkoholgruppen aufweisen. Sie lassen sich z.B. durch Copolymerisation von Ethylen mit Säuren, wie Acrylsäure, oder durch Luftoxydation von Polyolefinwachsen herstellen. Diese sogenannten emulgierbaren oder funktionalisierten Polyolefinwachse werden dann mit Hilfe eines geeigneten Emulgatorsystems in die Form stabiler wässriger Dispersionen gebracht (siehe z.B. DE-A 4 129 494 oder EP-A 0 108 925), doch lassen sich mit diesen Produkten wässrige Dispersionen mit einem Feststoffgehalt von mehr als 35 Gew.% Polyolefinwachs kaum erreichen. Als Dispergatoren werden für die emulgierbaren bzw. funktionalisierten Polyolefinwachse z.B. ethoxylierte Fettamine (EP-A 0 108 925) oder für ein oxydiertes Polyethylen mit einer Säurezahl von ca. 14 - 32 ethoxyliertes Octylphenol oder ethoxyliertes Ricinusöl und Alkalihydroxid (US-A 4 371 658) verwendet.

Sekundärdispersionen lassen sich auch aus nicht funktionalisierten Polyolefinwachsen herstellen, die mittlere Teilchengrößen von über 1 µm aufweisen. Dabei werden mikronisierte Wachse von Polyolefinhomopolymerisaten in ein System mit einem geeigneten Dispergator eingerührt. Es sind Feststoffgehalte von bis zu 65 Gew.% Wachs realisierbar. So beschreibt die DE-A 4 330 342 der BASF solche wässrigen Polyolefinwachsdispersionen, die (A) 5 bis 65 Gew.% Polyethylen- oder Polypropylenwachs mit einer mittleren Teilchengröße von 1 bis 50 µm und einer Säurezahl kleiner als 5 mg KOH / g Wachs und (B) 0,5 bis 20 Gew.% mit 1 bis 50 Mol eines 1,2-Alkylenoxids mit 2 bis 4 C-Atomen umgesetztes Glycerid von überwiegend ethylenisch ein- oder mehrfach ungesättigten C₁₆- bis C₂₂-Monocarbonsäuren, die zusätzlich Hydroxylgruppen enthalten können, als Dispergiermittel.

Die Handhabung von solchen Sekundärdispersionen hat aber den Nachteil, daß grundsätzlich Sekundärdispersionen aus Polyolefinwachsen aufgrund der niedrigen Dichte und der Hydrophobie des Wachses zur Phasentrennung neigen, d.h. instabil sind. Diese Instabilität ist u.a. abhängig von der mittleren Teilchengröße des mikronisierten Wachses, dem Dispergatorsystem, der Dispergiergüte, mit der das Wachs in das wässrige System eingebracht wurde, der Lagerzeit der Dispersion und der Lagertemperatur. Auch bei einem gutem Dispergatorsystem zeigen Proben bei mehrwöchiger Lagerung bei höheren Temperaturen, wie bei 40 bis 50°C, eine Phasentrennung und das Wachs bildet eine Schicht aus, die noch einiger Zeit nicht mehr einrührbar ist. Beim Transport der wässrigen Wachsdispersionen ist nicht nur ein Nachteil, daß große Wassermengen transportiert werden müssen, die wässrigen Wachsdispersion sollten zusätzlich beim Transport zur Verbesserung der Haltbarkeit auch gekühlt werden und weisen schließlich dennoch eine nur eingeschränkte Haltbarkeit beim Kunden auf.

Es wurde nun gefunden, daS sich überraschende Vorteile erzielen und manche Nachteile bei der Herstellung und Verwendung von Polyolefinwachsdispersionen vermeiden lassen, wenn nicht gemäß der DE-A 4 330 342 eine wässrige Polyolefinwachsdispersion hergestellt wird, sondern lediglich das nicht funktionalisierte Polyolefinwachs mit dem dort angegebenen Dispergator ohne Zugabe von Wasser, also in Abwesenheit von Wasser vermischt wird, wobei überraschend ein rieselfähiges Pulver resultiert, das leicht transportiert und gelagert werden kann. Das resultierende Pulver kann bei Bedarf problemlos in Wasser eingerührt werden und ergibt die gewünschte wässrige Polyolefinwachsdispersion.

Gegenstand der vorliegenden Erfindung sind somit in Wasser dispergierbare Mischungen von
(A) nicht funktionalisiertem Polyolefinwachs (Polyethylen- und/oder Polypropylenwachs) mit einer mittleren Teilchengröße von 1 bis 50 µm und einer Säurezahl von unter 5 mg KOH / g Wachs mit
(B) untergeordneten Mengen an mit 1 bis 50 Mol 1,2-Alkylenoxiden mit 2 bis 4 C-Atomen umgesetzten Glyceriden von überwiegend ethylenisch ein- oder mehrfach ungesättigten C₁₆- bis C₂₂-Monocarbonsäuren, die zusätzlich Hydroxylgruppen enthalten können, als hydrophile Dispergatoren,
die durch Mischen der Komponenten (A) und (B), bevorzugt bei etwa Raumtemperatur, unter Vermeidung eines Erhitzens auf die Schmelztemperatur der Wachse (A) ohne Zugabe von Wasser hergestellt wurden.

Die mittlere Teilchengröße der Polyolefinwachse der Mischkomponente (A) liegt bei 1 bis 50, insbesondere bei 3 bis 25 und bevorzugt bei 5 bis 15 µm. Die mittlere Teilchengröße wird bevorzugt nach dem Coulter-Verfahren bestimmt. Geeignet sind handelsübliche nicht funktionalisierte Polyethylenwachse mit Molekulargewichten (Gewichtsmittel) von 500 bis 10 000 g/mol, insbesondere 1000 bis 5000 g/mol, oder Polypropylenwachse mit Molekulargewichten (Gewichtsmittel) von 5000 bis 50000 g/mol, insbesondere von 15 000 bis 30 000, oder Mischungen davon. Der Gehalt an Polyolefin in diesen Wachsen beträgt mehr als 99 Gew.%. Diese Wachse werden nach üblichen Methoden fein zerkleinert (mikronisiert), so daß sie die notwendige Korngröße (Teilchengröße) aufweisen. Sie haben Säurezahlen von kleiner als 5, insbesondere kleiner als 2 und bevorzugt kleiner als 1 mg KOH/g Wachs, was auf lediglich als Verunreinigungen vorhandene saure Bestandteile in den Wachsen hinweist.

In der Mischkomponente (B) sind die Fettsäuren im alkoxylierten Glycerid überwiegend, vorzugsweise zu mehr als 80 Gew.% ethylenisch ein- oder mehrfach, insbesondere ein- bis dreifach ungesättigte C₁₆- bis C₂₂-Monocarbonsäuren, bevorzugt C₁₈-Monocarbonsäuren, die zusätzlich Hydroxylgruppen enthalten können. Beispiele solcher Fettsäuren sind Ölsäure, Elaidinsäure, Linolsäure, Linolensäure, Erucasäure und 12-Hydroxy-9-cis-octadecensäure (12-Hydroxyölsäure,Ricinolsäure). Das Glycerid liegt meist oder überwiegend als Triglycerid vor; Mono- und/oder Diglycerid-Strukturen mit nicht veresterten Hydroxylgruppen können auftreten und sind erforderlich, wenn die Fettsäurereste keine Hydroxylgruppen zur Reaktion mit den Alkylenoxiden enthalten.

Als Alkylenoxide kommen insbesondere Ethylenoxid, aber auch Propylenoxid und Butylenoxid in Frage, auch Gemische davon. Der Alkoxylierungsgrad beträgt 1 bis 50, insbesondere 3 bis 20 und bevorzugt 5 bis 15 Mole Alkylenoxid pro Mol Glycerid.

Als Komponente (B) wird ein ethoxyliertes Glycerid bevorzugt, das als C₁₈-Monocarbonsäure überwiegend, insbesondere zu mehr als 80 Gew.% 12-Hydroxy-9-cis-octadecensäure (Ricinolsäure) enthält. Hervorragende Ergebnisse erzielt man mit dem entsprechenden Ethoxylierungsprodukt von natürlich vorkommenden Ricinusöl (Castoröl), das zu 80 bis 85 Gew.% Ricinolsäureglycerid enthält. Ein mit 5 bis 15 Molen Ethylenoxid umgesetztes Ricinusöl ist im Handel als Emulan® ELP der BASF erhältlich.

In der erfindungsgemäßen Mischung ist die Komponente (B) in einer untergeordneten Menge enthalten, d.h. in einer Menge, die geringer als die Menge der Komponente (A) ist. Im allgemeinen liegt sie bei etwa 3 bis 30, insbesondere bei 5 bis 25 und bevorzugt bei 10 bis 25 Gew.% der Summe der Gewichtsmengen der Komponenten (A) und (B) in der erfindungsgemäßen Mischung. In jedem Fall soll die Menge an Komponente (B) als Dispergator hinreichend für die Vermeidung einer Koagulation der Wachsteilchen der Komponente (A) in der schließlich herzustellenden wässrigen Wachsdispersion sein, was durch einige Handversuche für die konkret genutzten Komponenten (A) und (B) ermittelt werden kann.

Das Vermischen der Komponenten (A) mit (B) erfolgt ohne Zugabe von Wasser. Das Mischen erfolgt mit Vorteil in maschinellen Mischaggregaten wie in einem Henschelmischer oder einem Dryblendmischer, wobei im allgemeinen Mischzeiten von wenigen Minuten bereits hinreichend sind. Auf diese Weise lassen sich unschwierig die Temperaturen beim Mischvorgang bevorzugt bei etwa Raumtemperatur und deutlich unter den Schmelztemperaturen bzw. Erweichungsbereichen der Wachskomponenten (A) halten.

Überraschenderweise resultiert beim Vermischen vom mikronisiertem Wachs (A) mit den, überwiegend flüssigen, Komponenten des Dispergatorsystems (B) ein Pulver, insbesondere ein rieselfähiges Pulver, das sich besonders gut für einen Transport, eine Lagerung und eine günstige Dosierung eignet. Die Mischung aus den Komponenten (A) und (B) läßt sich sogar in einem nicht beheizten Doppelschneckenextruder herstellen, wobei zweckmässigerweise die Dispergatorkomponente (B) über eine Pumpe von der Seite zudosiert werden kann.

Die erfindungsgemäßen Mischungen sind in Wasser leicht dispergierbar, können bei der Zugabe in Wasser ohne Aufschwimmen eingerührt werden und erlauben in einfachster Weise bei Raumtemperatur die Herstellung stabiler hochkonzentrierter wässriger Wachsdispersionen.

Die Mischungen aus den Komponenten (A) und (B) lassen sich durch Zumischung kleiner Mengen bekannter Zusätze modifizieren, wobei die Menge der Zusätze aber 10 und bevorzugt etwa 5 Gew.% der Summe der Mengen der Komponenten (A)+(B) nicht übersteigen soll. Zweckmässig ist oft die Zumischung von Schaumdämpfern wie Organophosphaten, von Verdickern wie modifizierten Bentoniten, von Bioziden wie von 1,2-Benzoisothiazolin-3-on oder von weiteren Dispergatoren wie Natriumsalzen von Naphthalinsulfonsäure-Formaldehyd-Kondensaten. Bei der Herstellung von wässrigen Wachsdispersionen mit Feststoffgehalten von über 50 Gew.% ist manchmal auch ein Zusatz von Lösungsvermittlern oder von Verflüssigern zweckmässig.

Die erfindungsgemässen Mischungen lassen sich mit großem Vorteil in Pulverform oder in Form der daraus hergestellten wässrigen Dispersionen als Hilfsstoffe für Druckfarben, Locke, Pflegemittel für Möbel und Fußböden sowie für Kosmetika verwenden. Bei Anwendungsformen, die mit Lebensmitteln in Kontakt kommen, ist von besonderer Bedeutung, daß neben dem Wachs (A) der Mischung auch die Dispergatoren (B) den gesetzlichen Vorschriften in den U.S.A. und in der Europäischen Union genügen. Weitere Verwendungen sind z.B. in der bereits zitierten DE-A 4 330 342 genannt und der einschlägigen Fachliteratur zu entnehmen.

Das nachfolgende Beispiel soll die vorliegende Erfindung weiter erklären, ohne sie zu beschränken.

### Beispiel

In einem Dryblendmischer (DIOSNA-Typ V25C der Fa. Dirks & Söhne, Osnabrück) wurden 7,5 kg eines handelsüblichen nicht funktionalisierten Polyethylenwachser (Luwax® AF 30) mit einer mittleren Teilchengröße von etwa 8 µm (gemessen nach dem Coulter-Verfahren) und einer Säurezahl von unter 0,5 mg KOH / g Wachs (bestimmt gemäß DIN 53402) als Komponente (A) der Mischung vorgelegt, und während 5 Minuten wurde ein Gemisch von 1,58 kg eines handelsüblichen nichtionischen Dispergators (Emulan® ELP der BASF, ein mit 5 bis 15 mol Ethylenoxid umgesetztes Ricinusöl) als Komponente (B) der Mischung sowie 28 g einer 10 gewichtsprozentigen Lösung von 1,2-Benzisothiazolin-3-on in einem Wasser-Propylenglykol-Gemisch als Biozid zugemischt. Danach wurde noch 3 Minuten weitergemischt und dann abgefüllt. Ei wurde ein rieselfähiges trockenes Pulver erhalten. Das erhaltene Pulver ließ sich bei der Zugabe in Wasser sofort einrühren, ohne daß es aufschwamm. Es erlaubte die einfache Herstellung hochkonzentrierter wässriger Wachsdispersionen.

## Patentansprüche

1. In Wasser dispergierbare Mischungen von
(A) nicht funktionalisiertem Polyolefinwachs mit einer mittleren Teilchengröße von 1 bis 50 µm und einer Säurezahl von unter 5 mg KOH / g Wachs mit
(B) untergeordneten Mengen an mit 1 - 50 Mol 1,2-Alkylenoxid mit 2 - 4 C-Atomen umgesetzten Glyceriden von überwiegend ethylenisch ein- oder mehrfach ungesättigten C₁₆- bis C₂₂-Monocarbonsäuren, die zusätzlich Hydroxylgruppen enthalten können, als hydrophile Dispergatoren,
die durch Mischen der Komponenten unter Vermeidung eines Erhitzens auf die Schmelztemperatur der Wachse (A) ohne Zugabe von Wasser hergestellt wurden.

2. In Wasser dispergierbare Mischungen gemäß Anspruch 1, dadurch gekennzeichnet, daß sie rieselfähige Pulver darstellen.

3. In Wasser dispergierbare Mischungen gemäß einem der Ansprüche 1 oder 2, dadurch gekennzeichnet, daß das Mischen der Komponenten bei etwa Raumtemperatur erfolgte.

4. In Wasser dispergierbare Mischungen gemäß einem der Ansprüche 1 bis 3, dadurch gekennzeichnet, daß die Menge an Komponente (B) hinreichend für eine Vermeidung einer Koagulation der Wachsteilchen der Komponente (A) in einer später hergestellten wässriger Dispersion ist.

5. In Wasser dispergierbare Mischungen gemäß einem der Ansprüche 1 bis 4, dadurch gekennzeichnet, daß sie die Mischungskomponente (B) in einer Menge von 3 bis 30 Gew.% der Summe der Gewichtsmengen der Komponenten (A) und (B) enthalten.

6. In Wasser dispergierbare Mischungen gemäß einem der Ansprüche 1 bis 5, dadurch gekennzeichnet, daß sie in einer Menge von nicht über etwa 5 Gew.%, bezogen auf die Summe der Mengen der Mischungskomponenten (A) + (B), Zusatzstoffe wie Schaumdämpfer, Verdicker, Biozide und/oder zusätzliche Dispergatoren zugemischt enthalten.

7. In Wasser dispergierbare Mischungen qemäß einem der Ansprüche 1 bis 6, dadurch gekennzeichnet, daß sie durch Vermischen in einem maschinellen Mischaggregat hergestellt wurden.

8. In Wasser dispergierbare Mischungen gemäß einem der Ansprüche 1 bis 7, dadurch gekennzeichnet. daß die Komponente (B) überwiegend flüssig ist.

9. In Wasser dispergierbare Mischungen gemäß einem der Ansprüche 1 bis 8, dadurch gekennzeichnet, daß als Komponente (B) ein mit 5 bis 15 Mol Ethylenoxid umgesetztes Ricinusöl verwendet wird.

10. Verwendung der Mischungen gemäß einem der Ansprüche 1 bis 9 in Pulverform oder in Form einer daraus hergestellten wässrigen Dispersion als Hilfsstoffe für Druckfarben, Lacke, Pflegemittel und Kosmetika.

11. Verfahren zur Herstellung von in Wasser dispergierbaren Mischungen von
(A) nicht funktionalisiertem Polyolefinwachs mit einer mittleren Teilchengröße von 1 bis 50 µm und einer Säurezahl von unter 5 mg KOH /g Wachs mit
(B) mit 1 - 50 Mol Alkylenoxid mit 2 - 4 C-Atomen umgesetzten Glyceriden von überwiegend ethylenisch ein- oder mehrfach ungesättigten C₁₆- bis C₂₂-Monocarbonsäuren, die zusätzlich Hydroxylgruppen enthalten können, als hydrophile Dispergatoren,
dadurch gekennzeichnet, daß die Komponente (A) mit einer untergeordneten Menge und insbesondere mit 3 bis 30 Gew.-% der Komponente (B), bezogen auf die Summe der Mengen der Komponenten (A)+(B), unter Vermeidung eines Erhitzens auf die Schmelztemperaturen der Wachse (A) ohne Zugabe von Wasser vermischt wird.
